# EUROPEAN PATENT APPLICATION

(11) **EP 1 719 583 A1**
(43) Date of publication of application: **08.11.2006**
(21) Application number: 04799745.7
(22) Date of filing: 11.11.2004
(51) Int. Cl.: B24B 13/005, B08B 7/04, B08B 1/04, B08B 3/04, G02B 1/04

(54) **SURFACE CLEANING/MODIFYING METHOD AND SURFACE CLEANING/MODIFYING DEVICE**

(30) Priority: 13.11.2003 JP 2003384070
(71) Applicant: SEIKO EPSON CORPORATION, Shinjuku-ku, Tokyo 163-0811 (JP)
(72) Inventor: HOSODA, Takashi, c/o Seiko Epson Corporation, Suwa-shi, Nagano 392-8502 (JP)
(74) Representative: HOFFMANN EITLE
(86) International application number: PCT/JP2004/017132
(87) International publication number: WO 2005/046933

(57) **Abstract**

A self-cleaning step for cleaning an elastic abrasive body 231 itself by pressing the rotating elastic abrasive body 231 against a pressing member 221 to deform the elastic body 231 while supplying slurry L containing abrasive to the elastic abrasive body 231 so as to clean the elastic abrasive body 231 is added to a scrub cleaning step in which a plastic optical component 1 is rotated and the rotating elastic abrasive body 231 is pressed against a surface of the plastic optical component 1 while supplying slurry L containing abrasive between the surface of the plastic optical component 1 and the elastic abrasive body 231 so as to clean the plastic optical component 1.

## Description

### CROSS-REFERENCE TO RELATED APPLICATIONS.

This application claims priority from Japanese Patent Application JP 2003-384070 filed November 13, 2003, which is incorporated by reference, herein, in its entirety.

### FIELD OF THE INVENTION.

The present invention relates to a surface cleaning and modifying method and surface cleaning and modifying apparatus capable of effectively cleaning a surface of a plastic optical component such as a plastic lens.

### BACKGROUND OF THE INVENTION.

A drawback to a plastic optical component is that it is easily scratched due to its softness. Thus, a hard-coating for providing anti-friction and anti-scratch properties is formed on a surface of the plastic optical component, and an anti-reflection coating is overlaid on the hard-coating, thereby improving the performance and function of the plastic optical component.

Particularly for a plastic spectacle lens, hard-coating formation is a surface treatment essential to improve the hardness of the lens surface and the tight connection with an evaporated coating and to provide colorability.

As a pretreatment for hard-coating formation, it is necessary to carry out a cleaning step for cleaning the surface of the plastic optical component so as to remove dust and dirt adhering thereto for the achievement of sufficient reaction between a hard-coating and a material. When cleaning in the cleaning step is insufficient, the appearance and durability of the surface of the plastic optical component are adversely affected, resulting in lowered yields. Thus, the cleaning step is an important pretreatment.

In a conventional method for cleaning the plastic optical component, the dirt adhering to the surface of the optical component is dissolved and separated using a dip-type cleaning apparatus.

An improvement to the conventional cleaning method has been proposed in JP-A-5-70615 and in JP-A-11-48117. According to these proposals, a scrub cleaning method for polishing the surface of the optical component with abrasive is performed by supplying slurry, which contains abrasive dispersed in water, while scrubbing the surface of the optical component with an elastic abrasive body (or by scrubbing the surface of the optical component with an elastic abrasive body, which contains abrasive dispersed therein, while pouring water).

This scrub cleaning method is a surface cleaning and modifying method capable of removing dirt adhering to the surface of the plastic optical component and a non-uniform surface formed due to degradation or other caused during or after shaping by physically polishing the surface of the plastic optical component with abrasive. By this method, drawbacks in appearance such as cissing caused by dirt are prevented, and hard-coating is sufficiently tight-connected and bonded with the surface of the optical component without hindrance by a non-uniform layer, thereby enhancing the tight connection between the surface and the hard-coating. Additionally, the connection tightness is further increased due to activation of the surface caused by polishing and an anchor effect caused by minute polishing scratches.

However, in the above-described scrub cleaning method, dirt or contaminant sometimes remains on the elastic abrasive body after cleaning the plastic optical component. If the next plastic optical component is cleaned with the elastic abrasive body to which dirt or contaminant adheres, the dirt or contaminant may be transferred to the surface of the plastic optical component or may scratch the surface deeply. Thus, the dirt, contaminant and deep scratches existing on the surface of the plastic optical component have been the cause for lowering yields of the hard-coating formation treatment.

### SUMMARY OF THE INVENTION.

The present invention has been developed to solve the above-described problem. It is an object of the invention to provide a surface cleaning and modifying method and surface cleaning and modifying apparatus capable of polishing and cleaning a plastic optical component with abrasive using an elastic abrasive body without leaving dirt or deep scratches on a surface of the plastic optical component.

In order to achieve the above object, a first aspect of the invention is to provide a surface cleaning and modifying method characterized by comprising: a scrub cleaning step in which a plastic optical component is rotated and a rotating elastic abrasive body is pressed against a surface of the plastic optical component while supplying slurry which contains abrasive dispersed in liquid between the surface of the plastic optical component and the elastic abrasive body so as to clean the plastic optical component; and a self-cleaning step in which the rotating elastic abrasive body is deformed while supplying slurry which contains abrasive dispersed in liquid to the elastic abrasive body so as to clean the elastic abrasive body.

The plastic optical component is scrub-cleaned with abrasive using the elastic abrasive body in the scrub cleaning step, and the elastic abrasive body itself used for the cleaning is cleaned to remove di rt or contaminant adhering to the elastic abrasive body in the self-cleaning step. The self-cleaning step prevents dirt or contaminant from re-adhering to the plastic optical component from the elastic abrasive body. In addition, the self-cleaning step prevents desiccation of the elastic abrasive body. As a result, the plastic optical component can be cleaned without being deeply scratched by the dried elastic abrasive body.

A second aspect of the invention is to provide a surface cleaning and modifying method as described in the first aspect of the invention, characterized in that the self-cleaning step is performed by pressing the elastic abrasive body and a pressing member against each other to deform the elastic abrasive body.

Since the elastic abrasive body is largely deformed by pressing the pressing member and the elastic abrasive body against each other, the elastic abrasive body can be effectively self-cleaned.

A third aspect of the invention is to provide a surface cleaning and modifying method as described in the first aspect of the invention, characterized by conducting the scrub cleaning step and the self-cleaning step alternately.

Since the scrub cleaning is performed using the elastic abrasive body which is always cleaned by providing the self-cleaning step between the scrub cleaning steps, the plastic optical component can be cleaned without leaving dirt and large scratches thereon.

A fourth aspect of the invention is to provide a surface cleaning and modifying method characterized by comprising: a scrub cleaning step in which a plastic optical component is rotated and a rotating elastic abrasive body which contains abrasive dispersed therein is pressed against a surface of the plastic optical component while supplying water between the surface of the plastic optical component and the elastic abrasive body so as to clean the plastic optical component; and a self-cleaning step in which the rotating elastic abrasive body is deformed while supplying water to the elastic abrasive body so as to clean the elastic abrasive body.

The plastic optical component is scrub-cleaned with abrasive using the elastic abrasive body in the scrub cleaning step, and the elastic abrasive body itself used for the cleaning is cleaned to remove di rt or contaminant adhering to the elastic abrasive body in the self-cleaning step. The self-cleaning step prevents dirt or contaminant from re-adhering to the plastic optical component from the elastic abrasive body. In addition, the self-cleaning step prevents desiccation of the elastic abrasive body. As a result, the plastic optical component can be cleaned without being deeply scratched by the dried elastic abrasive body.

A fifth aspect of the present invention is to provide a surface cl eani ng and modi fyi ng method as descri bed in the fourth aspect of the invention, characterized in that the self-cleaning step is performed by pressing the elastic abrasive body and a pressing member against each other to deform the elastic abrasive body.

Since the elastic abrasive body is largely deformed by pressing the pressing member and the elastic abrasive body against each other, the elastic abrasive body can be effectively self-cleaned.

A sixth aspect of the invention is to provide a surface cleaning and modifying method as described in the fourth aspect of the invention, characterized by conducting the scrub cleaning step and the self-cleaning step alternately.

Since the scrub cleaning is performed using the elastic abrasive body which is always cleaned by providing the self-cleaning step between the scrub cleaning steps, the plastic optical component can be cleaned without leaving dirt and large scratches thereon.

A seventh aspect of the invention is to provide surface cleaning and modifying apparatus characterized by comprising: an optical component holder for holding and rotating a plastic optical component; a pressing member disposed away from the optical component holder; an abrasive body holder for holding and rotating an elastic abrasive body; an operation section for operating the optical component holder and/or the abrasive body holder so as to execute a cleaning action for pressing the elastic abrasive body against the plastic optical component and a self-cleaning action for pressing the elastic abrasive body against the pressing member; and a liquid supply member for supplying liquid to the elastic abrasive body during the cleaning action and the self-cleaning action.

In the scrub cleaning step, the elastic abrasive body is held and rotated by the abrasive body holder with the plastic optical component held and rotated by the optical component holder. In this condition, the elastic abrasive body is pressed against the surface of the plastic optical component by the operation section while supplying liquid from the liquid supply member to conduct the scrub cleaning. In the self-cleaning step, the elastic abrasive body rotated by the abrasive body holder is pressed against the pressing member by the operation section while supplying liquid from the liquid supply member to conduct the self-cleaning.

An eighth aspect of the invention is to provide a surface cleaning and modifying apparatus as described in the seventh aspect of the invention, characterized in that the operation section conducts the cleaning action and the self-cleaning action alternately.

Since the scrub cleaning is performed using the elastic abrasive body which is always cleaned by providing the self-cleaning step between the scrub cleaning steps, the plastic optical component can be cleaned without leaving dirt and large scratches thereon.

A ninth aspect of the invention is to provide a surface cleaning and modifying apparatus as described in the seventh aspect of the invention, characterized in that the liquid supply member supplies slurry which contains abrasive dispersed in liquid.

The surface of the plastic optical component is polished and modified with abrasive by supplying slurry which contains abrasive dispersed in liquid to the surface of the plastic optical component.

A tenth aspect of the invention is to provide surface cleaning and modifying apparatus as described in the seventh aspect of the invention, characterized in that the elastic abrasive body contains abrasive dispersed therein and the liquid supply member supplies water.

The surface of the plastic optical component is cleaned and modified with abrasive by polishing the surface using the elastic abrasive body which contains abrasive dispersed therein while supplying water. The elastic abrasive body is cleaned with water while being pressed against the pressing member, thereby removing di rt and contaminant adhering to the elastic abrasive body itself.

A surface cleaning and modifying method and surface cleaning and modifying apparatus of the present invention are utilized for cleaning a surface of a plastic optical component such as a plastic lens, and for pretreatment before forming a hard-coating or other.

The invention is taught below by way of various specific exemplary embodiments explained in detail, and illustrated in the enclosed drawing figures.

### BRIEF DESCRIPTION OF THE DRAWINGS.

The drawing figures depict, in highly simplified schematic form, embodiments reflecting the principles of the invention. Many items and details that will be readily understood by one familiar with this field have been omitted so as to avoid obscuring the invention. In the drawings:
FIG. 1(a) is a flowchart of manufacturing steps in which cleaning and hard-coating formation are carried out first on one side of a plastic lens and subsequently on the other side.
FIG. 1(b) is a flowchart of manufacturing steps in which both sides of the plastic lens are cleaned and subsequently coated with hard-coatings at a time.
FIG. 2 illustrates arrangements of lens cleaning equipment in a first embodiment.
FIG. 3 schematically illustrates a structure of surface cleaning and modifying apparatus in the first embodiment.
FIG. 4 schematically illustrates a structure of a self-cleaning device.
FIG. 5 illustrates a disposition of a lens cleaning device in a second embodiment.
FIGS. 6(a), 6(b), and 6(c) schematically illustrate a structure of surface cleaning and modifying apparatus in the second embodiment. In particular: FIG. 6(a) shows a condition before cleaning starts; FIG. 6(b) shows a condition during scrub cleaning; and FIG. 6(c) shows a condition during self-cleaning.

### DETAILED DESCRIPTION.

The invention will now be taught using various exemplary embodiments. Although the embodiments are described in detail, it will be appreciated that the invention is not limited to just these embodiments, but has a scope that is significantly broader. The appended claims should be consulted to determine the true scope of the invention.

In other words, embodiments of a surface cleaning and modifying method and surface cleaning and modifying apparatus according to the present invention are hereinafter described, but the invention is not limited to those embodiments.

Plastic optical components to which the surface cleaning and modifying method of the invention is applicable involve a plastic spectacle lens, a plastic lens constituting an optical system in various types of cameras, a cover glass used as a protective cover for a display device of portable equipment and so forth. Examples of the material include diethylene glycol bisallyl carbonate (CR-39) resin, polyurethane resin, thiourethane resin, polycarbonate resin, acrylic resin and other material.

Unlike inorganic glass, a plastic optical component is easily scratched due to its softness. Especially for a spectacle lens, formation of hard-coating is essential surface treatment so as to improve the hardness of the lens surface and tight connection with an evaporated coating and provide colorability. Described below is an example of a plastic lens as a plastic optical component.

In a hard-coating forming step, a film of hard-coating liquid is formed on the surface of the plastic lens by dipping the plastic lens in the hard-coating liquid containing fine particles of metal oxide, binders, catalysts and others, or by spin-coating or other coating method. Subsequently, the hard-coating film is hardened by heating for two to three hours at 120 to 140 degrees celsius to form a hard-coating. Formation of the hard-coating is necessary on both sides of the plastic lens.

As pretreatment before the hard-coating forming step, a cleaning step for cleaning the surface of the plastic lens to remove contaminant or dirt remaining on the surface of the plastic lens is indispensable. There are two methods for cleaning both sides of the plastic lens and forming the hard-coating thereon.

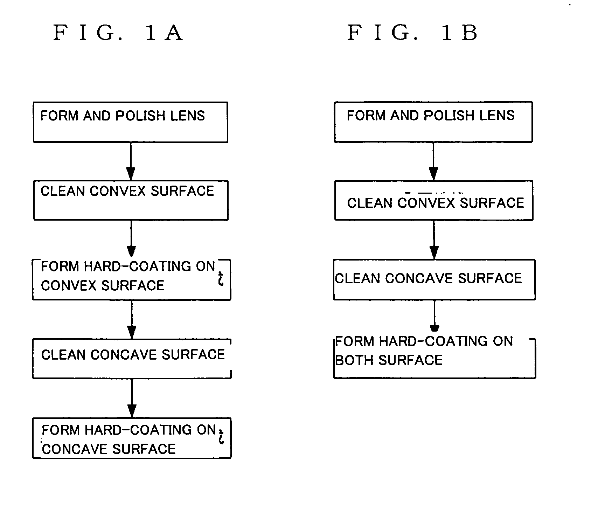

Flowcharts in FIG. 1 show two methods for cleaning both sides of the plastic lens and forming the hard-coating thereon. FIG. 1(a) is a flowchart of manufacturing steps in which cleaning and hard-coating formation are carried out first on one side of a plastic lens and subsequently on the other side, while FIG. 1(b) is a flowchart of manufacturing steps in which both sides of the plastic lens are cleaned and subsequently coated with hard-coatings at a time. The processing order of a convex surface and a concave surface may be reversed.

In the su rface cl eani ng and modi fyi ng method of the present invention, a self-cleaning step for cleaning an elastic abrasive body itself is added to a scrub cleaning step for polishing and cleaning one side of the plastic lens with abrasive using the elastic abrasive body as described above.

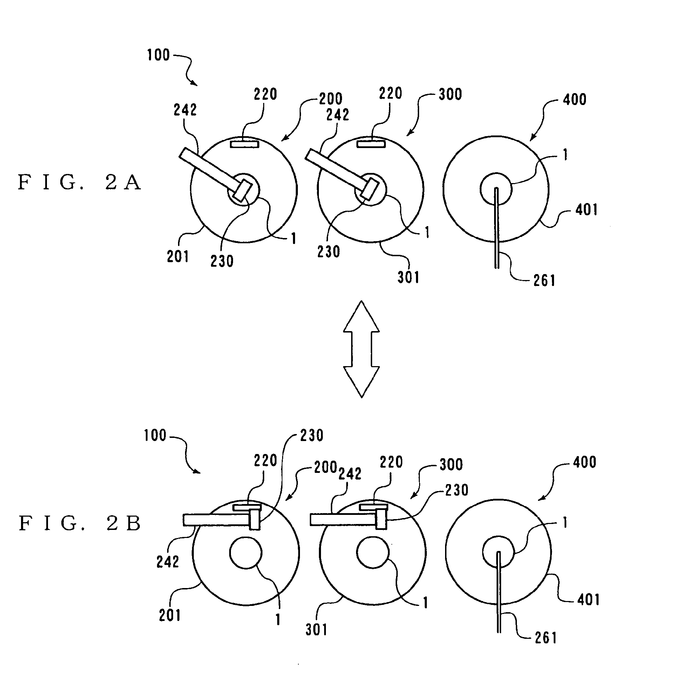

FIG. 2 illustrates arrangements of lens cleaning equipment in a fi rst embodiment. FIG. 2 (a) shows a condi ti on du ri ng scrub cleaning, while FIG. 2(b) shows a condition during self-cleaning. Lens cleaning equipment 100 includes surface cleaning and modifying apparatus 200 for scrub-cleaning one si de of a plastic lens 1 wi th abrasive, water cl eani ng apparatus 300 for water-cleaning the side of the plastic lens polished by the surface cleaning and modifying apparatus 200 to wash off the abrasive and the like, and a drier 400 for drying the side of the plastic lens which is wet after cleaning. The surface cleaning and modifying apparatus 200, the water cleaning apparatus 300 and the drier 400 are disposed in seri es and their peripheries are veiled by bottom-attached cylindrical covers 201, 301 and 401, respectively. A not-shown carrier for carrying the pl asti c lens i n and out of these apparatus is also provided.

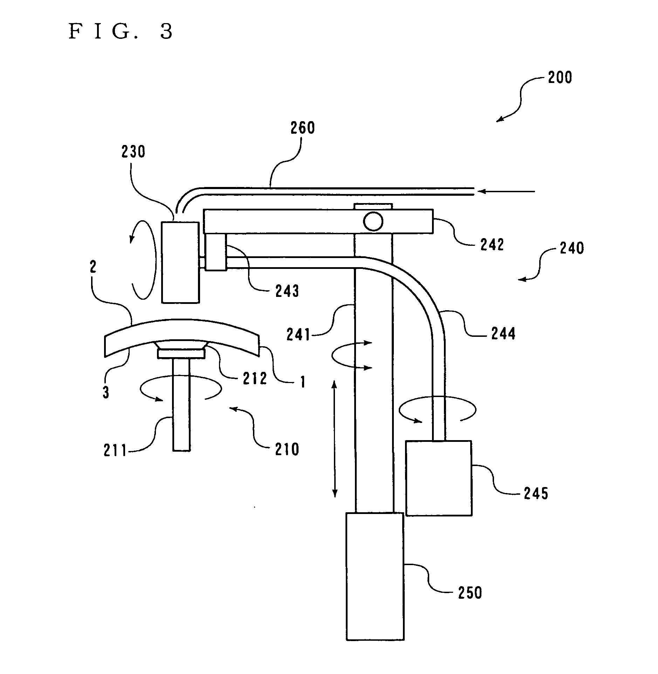

Since the surface cleaning and modifying apparatus 200 and the water cleaning apparatus 300 have similar basic structures, only the structure of the surface cleaning and modifying apparatus 200 is herein described. FIG. 3 schematically illustrates the structure of the surface cleaning and modifying apparatus 200 in the fi rst embodiment. The surface cleaning and modifying apparatus 200 includes an optical component holder 210 for holding and rotating the plastic lens 1 approximately at a center of the cylindrical cover 201 (see FIG. 2). The optical component holder 210 has a rotational shaft 211 and an absorption chuck 212 positioned on the upper end of the rotational shaft 211. The rotational shaft 211 is hollow and rotated around a vertically extending axis by a not-shown driving motor. The absorption chuck 212 holds the plastic lens 1 by absorption and communicates with the hollow portion of the rotational shaft 211. The not-shown carrier carries the plastic lens 1 in so as to bring the lower surface of the plastic lens 1 into contact with the absorption chuck 212 while aligning a geometrical center of the round-shaped plastic lens 1 with a center of the rotational shaft 211.

A not-shown vacuum piping is connected to the hollow portion of the rotational shaft 211, by which piping the absorption chuck 212 is evacuated after the lower surface of the plastic lens 1 comes into contact wi th the absorpti on chuck 212 such that the absorption chuck 212 can hold the lower surface of the plastic lens 1 by absorption. An upper surface of the plastic lens 1 thus held is a convex surface 2 or a concave surface 3 in need of cleaning and modifying. Described below is an example of cleaning the convex surface 2, and the same method is applicable to the concave surface 3. Additionally, a pressing member 220 in the shape of a round bar, for example, is di sposed within the cover 201 away from the optical component holder 210 and close to the cover 201 (see FIG. 2). The pressing member 220 will be described later.

An elastic abrasive body 230 in a cylindrical shape having a short axis is supported by an abrasive body holder 240 such that the peripheral surface of the elastic abrasive body 230 is rotatable around a horizontal axis. The abrasive body holder 240 has a vertically standing support 241 which is disposed outside the cover 201. The support 241 is rotated clockwise and anticlockwise by a driving force of an operation section 250, and is also capable of rising and descending in a fixed range. A base end of a support arm 242 as a cantilevered boom extending horizontally is securely attached to the upper end of the support 241. A horizontal bearing 243 is fixed to the tip of the support arm 242: one end of a flex shaft 244 is supported by the bearing 243, and the end of the flex shaft 244 passing through the bearing 243 is secured to a hollow portion positioned at the center of the elastic abrasive body 230. The other end of the flex shaft 244 is directly connected with a rotational shaft of a motor 245. The rotation of the motor 245 is transmitted through the flex shaft 244 to the elastic abrasive body 230. Thus, the elastic abrasive body 230 is so supported by the abrasive body holder 240 as to be rotatable around the horizontal rotation axis. The elastic abrasive body 230 also circles with the rotation of the support 241 rotated by the operation section 250 and moves upward and downward with the rising and descending of the support 241.

The rotations and the rising and descending motions of the support 241 by the driving of the operation section 250 are sequentially controlled, for example. The operation section 250 performs the following actions: a cleaning action for lowering the elastic abrasive body 230 positioned approximately above the center of the plastic lens 1 which is supported and rotated by the optical component holder 210 to press the rotating elastic abrasive body 230 against the rotating plastic lens 1 and deform the elastic abrasive body 230, and subsequently shifting the rotating elastic abrasive body 230 from the center to the edge of the plastic lens 1 at a predetermined speed; an action for raising the elastic abrasive body 230 which has reached the edge of the plastic lens 1 to separate the elastic abrasive body 230 from the plastic lens 1; a self-cleaning action for shifting the elastic abrasive body 230 positioned above the edge of the plastic lens 1 in a horizontal direction to press the elastic abrasive body 230 against the pressing member 220; and an action for shifting the elastic abrasive body 230, which has been pressed against the pressing member 220, to a position above the center of the next plastic lens 1 after the plastic lens 1 thus cleaned is transferred from the optical component holder 210 to the next step by the carrier and the next plastic lens 1 is attached to the optical component holder 210. These actions are repeated.

The elastic abrasive body 230 may be a liquid-permeable abrasive sponge which is made from PVA, urethane, PP or other material. A sponge made from PVA, urethane, PP or other material in which abrasive is dispersed during shaping may also be used. The elastic abrasive body 230 in which abrasive is dispersed may be employed for both of the surface cleaning and modifying apparatus 200 and the water cleaning apparatus 300. PVA is a hard material when dried, and softens like a sponge when wet.

The shape of the elastic abrasive body 230 is generally a cylindrical shape having a short axis. However, the shape may be dome-shaped, for example, and is not specifically limited. The peripheral surface of the elastic abrasive body 230 used for polishing the plastic lens 1 may have concaves and convexes or may be smooth.

A liquid outlet 260 is secured on the horizontal arm 242 of the abrasive body holder 240 above the elastic abrasive body 230 to deliver liquid to the elastic abrasive body 230 from above. The liquid outlet 260 is so designed as to supply liquid to the elastic abrasive body 230 all the time even when the elastic abrasive body 230 is shifted. The elastic abrasive body 230 is formed by a liquid-permeable sponge, and the liquid supplied to the elastic abrasive body 230 passes through the elastic abrasive body 230 to reach the surface of the plastic lens 1. while the elastic abrasive body 230 is being pressed against the convex surface 2 of the plastic lens 1, the liquid having passed through the elastic abrasive body 230 enters between the elastic abrasive body 230 and the convex surface 2 of the plastic lens 1.

The scrub cleaning step is performed while the elastic abrasive body 230 pressed against the plastic lens 1 is moving from the center to the edge of the plastic lens 1, and the self-cleaning step is performed while the elastic abrasive body 230 is being pressed against the pressing member 220. During these actions, the elastic abrasive body 230 keeps rotating. When the plastic lens 1 is successively cleaned, the scrub cleaning step and the self-cleaning step are alternately conducted.

When the plastic lens 1 is not carried in during operation, the rotation of the elastic abrasive body 230 is stopped with the elastic abrasive body 230 pressed against the pressing member 220, along with an interruption of liquid supply. However, the elastic abrasive body 230 is rotated and the liquid is supplied at predetermined time intervals to periodically conduct the self-cleaning step.

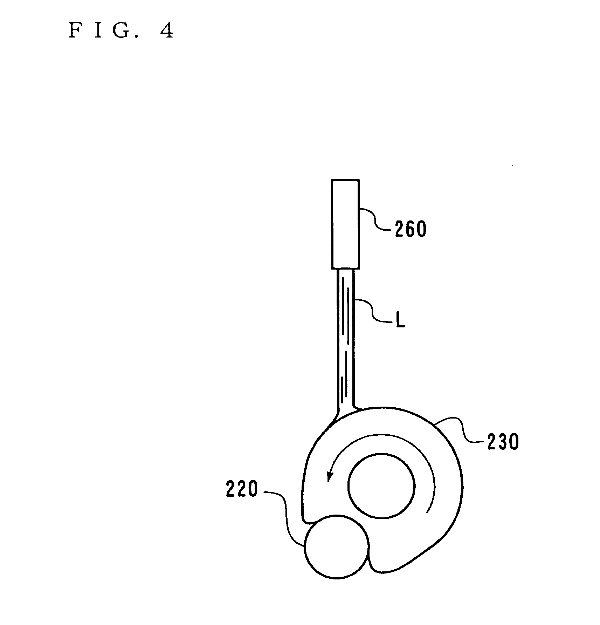

FIG. 4 is a conceptual view showing a condition during the self-cleaning step. The rotating elastic abrasive body 230 is pressed against the round-bar-shaped pressing member 220, thereby deforming the peripheral surface of the elastic abrasive body 230. Liquid L is poured from the liquid outlet 260 to the upper surface of the deformed elastic abrasive body 230. The liquid L is water when the elastic abrasive body 230 contains abrasive dispersed therein, or slurry which contains abrasive dispersed in liquid such as water when the elastic abrasive body 230 does not include abrasive. The foregoing statements do not rule out the possibility of abrasive being in the liquid and also in the elastic body.

The abrasive employed herein may be any type available on the market for abrasive purpose, including metal oxide such as Al₂O₃, CeO₂, SiO₂, SiO, ZrO₂ and Cr₂O₃, or carbide such as SiC and C. For the plastic lens 1, abrasive made of Al₂O₃ is preferably used. The particle diameter and configuration of the abrasive is arbitrarily determined in accordance with the material, shape and objects adhering to the surface, or a desired surface roughness of the plastic optical component to be polished. Slurry which contains abrasive dispersed in water is used so as to diffuse frictional heat caused between the elastic abrasive lens 230 and the plastic lens 1 and improve fitness with the shape of the convex surface 2.

As described above, the self-cleaning step is a process in which the elastic abrasive body 230 itself is cleaned by supplying liquid while deforming the elastic abrasive body 230 to remove dirt therefrom. By providing the self-cleaning step, dirt and contaminant adhering to the elastic abrasive body 230 are removed and their re-adhesion to the plastic lens 1 is prevented. Thus, the possibility of dirt adhering to and large scratch formed on the plastic lens 1 is eliminated. When the plastic lens 1 is cleaned with the elastic abrasive body 230 which is dried after a long non-cleaning period, the plastic lens 1 may be largely scratched. Thus, a function for preventing desiccation of the elastic abrasive body 230 and resultant large scratch formed on the plastic lens 1 is also provided. When the plastic lens 1 is not carried in for more than a predetermined time period during operation, the self-cleaning is compulsively performed at predetermined time intervals to securely prevent the elastic abrasive body 230 from being dried.

Generally, the elastic abrasive body 230 is deformed by pressing the round-bar shaped or cylindrical pressing member 220 and the elastic abrasive body 230 against each other in the self-cleaning step. The pressing member 220 is required to have a size sufficient to contact the entire peripheral surface of the elastic abrasive body 230 used for cleaning when the elastic abrasive body 230 is rotated. The cross-sectional shape of the pressing member 220 may be either round or rectangular, but is preferably round when the pressing member 220 is easy to be scratched by the material of the elastic abrasive body 230.

The material employed for the pressing member 220 may include iron, stainless steel, plastic, ceramic and other materials, but its cleaning effect will be lowered if the material is too soft to withstand the pressing by the elastic abrasive body 230. Additionally, a material which may reversely contaminate the elastic abrasive body 230 by rusti ng or bleeding out cannot be used. The pressing member 220 is preferably disposed in such a position that the portion of the pressing member 220 contacting with the elastic abrasive body 230 lies parallel to the rotation axis of the elastic abrasive body 230 when the abrasive body holder 240 is circled to separate the elastic abrasive body 230 away from the plastic lens 1, thereby bringing the pressing member 220 into contact with the peripheral surface of the elastic abrasive body 230 uniformly.

The scrub cleaning step performed by the surface cleaning and modifying apparatus 200 is now described. The not-shown carrier transfers the plastic lens 1 from a stand-by position to the surface cleaning and modifying apparatus 200. The absorption chuck 212 of the optical component holder 210 holds the concave surface 3 of the plastic lens 1 by absorption with the convex surface 2 on the upper side. The optical component holder 210 rotates the plastic lens 1 at 500 to 1,000 rpm. The operation section 250 circles the support 241 to dispose the elastic abrasive body 230 above the plastic lens 1 while the abrasive body holder 240 rotates the elastic abrasive body 230 at 30 to 500 rpm.

subsequently, the operation section 250 lowers the elastic abrasive body 230 to press the elastic abrasive body 230 against the center of the plastic lens 1. slurry containing abrasive is supplied from the liquid outlet 260 to the upper-side peripheral surface of the elastic abrasive body 230. Dirt on the plastic lens 1 is not sufficiently removed when the supply amount of slurry is too small , while slurry may scatter outside the cover 201 due to the rotations of the plastic lens 1 and the elastic abrasive body 230 when the supply amount of slurry is too large.

It is thus necessary to determine the amount of slurry appropriately. When the amount of slurry supplied during self-cleaning is sufficient for scrub cleaning, replenishment of slurry during scrub cleaning is not needed. The rotating elastic abrasive body 230 pressed against the plastic lens 1 is shifted from the center to the edge of the plastic lens 1 to polish the convex surface 2 of the plastic lens 1 with abrasive. By providing the scrub cleaning step in which the plastic lens 1 is rotated and the rotating elastic abrasive body 230 is pressed against the plastic lens 1 while supplying slurry containing abrasive between the elastic abrasive body 230 and the surface of the plastic lens 1 so as to movably clean the plastic lens 1, di rt or contaminant on the enti re convex surface 2 of the plastic lens 1 can be scrubbed off with abrasive and also a non-uniform surface created during shaping or due to degradation after shaping or by other cause can be removed.

After the scrub cleaning step, the self-cleaning step is performed in the following manner. The operation section 250 circles the support 241 to shift the elastic abrasive body 230 from the shaped lens body 2 to the pressing member 220. The abrasive body holder 240 rotates the elastic abrasive body 230 at 30 to 500 rpm while pressing the elastic abrasive body 230 against the pressing member 220. In this condition, the liquid supply member 260 supplies slurry containing abrasive to the elastic abrasive body 230 along with the deformation of the elastic abrasive body 230 caused by the pressing member 220 so as to conduct the self-cleaning step.

The time required for the self-cleaning differs depending on the level of dirt on the elastic abrasive body 230. However, it is desirable to finish this process with the least possible delay in the cleaning time schedule, generally only in several seconds during carrying-in of the plastic lens 1. Additionally, the elastic abrasive body 230 may scratch the plastic lens 1 if the elastic abrasive body 230 is dried before the start of cleaning or after a long period of stop. Thus, it is preferable to moisten and soften the elastic abrasive body 230 by the self-cleaning step in such a case.

In the surface cleaning and modifying process where the scrub cleaning step and the self-cleaning step are alternated, since the scrub cleaning step is performed using the elastic abrasive body 230 which is always cleaned by the self-cleaning step conducted between the scrub cleaning steps, the plastic lens 1 can be cleaned without leaving dirt or large scratch thereon.

When the elastic abrasive body 230 in which abrasive is dispersed is employed, the scrub cleaning step and the self-cleaning step are conducted under the same conditions as described above except that water is used in lieu of slurry.

Next, a water cleaning process performed by the water cleaning apparatus 300 is described. The scrub cleaning step and the self-cleaning step are similarly involved in the water cleaning process. For example, the not-shown carrier transfers the plastic lens 1, which has been cleaned by the surface cleaning and modifying apparatus 200 in the surface cleaning and modifying process, to the water cleaning apparatus 300. The absorption chuck 212 of the optical component holder 210 holds the lower surface of the plastic lens 1 by absorption with the convex surface 2 on the upper side.

The optical component holder 210 rotates the plastic lens 1 at 500 to 1,000 rpm. The operation section 250 shifts the elastic abrasive body 230 to a position above the plastic lens 1, while the abrasive body holder 240 rotates the elastic abrasive body 230 at 30 to 500 rpm. Subsequently, the operation section 250 lowers the elastic abrasive body 230 to press the elastic abrasive body 230 against the center of the plastic lens 1. water is supplied from the liquid outlet 260 to the upper peripheral surface of the elastic abrasive body 230. Pure water is preferably used for rinsing off. The elastic abrasive body 230 pressed against the plastic lens 1 is shifted from the center to the edge of the plastic lens 1 to scrub the entire convex surface 2 of the plastic lens 1 using the elastic abrasive body 230.

By providing the water cleaning step in which the plastic lens 1 is rotated and the rotating elastic abrasive body 230 is pressed against the plastic lens 1 while supplying water between the surface of the plastic lens 1 and the elastic abrasive body 230 so as to clean the plastic lens 1 with water, abrasive and the like remaining on the convex surface 2 of the plastic lens 1 can be scrubbed off.

After the cleaning process, the elastic abrasive body 230 is shifted from the plastic lens 1 to the pressing member 220. The elastic abrasive body 230 rotating at 30 to 500 rpm is pressed against the pressing member 220 while supplying water to the elastic abrasive body 230 so as to perform the self-cleaning step. The elastic abrasive body 230 may scratch the plastic lens 1 if the elastic abrasive body 230 is dried before the start of cleaning or after a long period of stop. Thus, it is preferable to moisten and soften the elastic abrasive body 230 by the self-cleaning step in such a case.

Also i n the water cleaning process where the scrub cleaning and the self-cleaning are alternated, since the water cleaning is performed using the elastic abrasive body 230 which is always cleaned by the self-cleaning step conducted between the cleaning steps, the plastic lens 1 can be cleaned without leaving dirt or any large scratch thereon.

In the example described above, cleaning of the plastic lens 1 and the self-cleaning are performed by shifting the elastic abrasive body 230. However, the scrub cleaning of a plastic optical component and the self-cleaning can be similarly conducted by shifting the optical component holder 210 for holding the plastic lens 1 and the pressing member 220 with the elastic abrasive body 230 fixed to press the pressing member 220 against the elastic abrasive body 230.

Additionally, in the above description, the liquid supply member is shifted together with the elastic abrasive body to supply the same liquid in both of the scrub cleaning step and the self-cleaning step. However, a liquid supply member may be provided in each of the scrub cleaning step and the self-cleaning step so as to supply different liquid in each step.

Described now is the drier 400. The drier 400 includes the optical component holder 210 for holding and rotating the plastic lens 1 and a volatile liquid supply member 261 for dropping volatile liquid such as isopropyl alcohol approximately onto the center of the plastic lens 1 (see FIG. 2).

In a drying process performed by the drier 400, the not-shown carrier transfers the plastic lens 1 from the water cleaning apparatus 300 to the drier 400 after the water cleaning process. The absorption chuck 212 of the optical component holder 210 holds the concave surface 3 of the plastic lens 1 by absorption with the convex surface 2 on the upper side. The optical component holder 210 rotates the plastic lens 1 at 200 to 3,000 rpm, preferably 800 to 2,000 rpm. Volatile liquid is dropped on the rotating plastic lens 1. The dropped volatile liquid is spread out by a centrifugal force. Consequently, water existing on the convex surface 2 is replaced by a thin film of the volatile liquid, and the convex surface 2 is dried by volatilization of the thin film of the volatile liquid.

Additionally, in the drying process, heated water may be employed as volatile liquid. In this case, the drier preferably includes a dry air supply member for supplying dry air to the plastic lens 1 from above, an outlet provided at a bottom wall or a lower portion of a side wall of the cover 401 for discharging the dry air supplied from the dry air supply member, and a hot water supply member for supplying heated water at temperatures ranging from 30 to 100 °C, preferably from 50 to 70 °C in lieu of the volatile liquid supply member.

In a hot water supply step, hot water is dropped from the hot water supply member onto the convex surface 2 of the plastic lens 1 while the optical component holder 210 rotates the plastic lens 1 at revolution of 50 to 300 rpm, preferably at 100 to 200 rpm. The dropped hot water is spread out by a centrifugal force, forming a uniform thin film on the convex surface 2 of the plastic lens 1. subsequently, the dry air supply member supplies dry air to the surface of the plastic lens 1 while the optical component holder 210 rotates the plastic lens 1 at high rotational speed of 200 to 3,000 rpm, preferably 800 to 2,000 rpm to drain water. As a result, the film of hot water formed on the convex surface 2 of the plastic lens 1 is evaporated and the plastic lens 1 is thus dried.

After the convex surface 2 of the plastic lens 1 is thus cleaned and modified by the surface cleaning and modifying apparatus 200, the water cleaning apparatus 300 and the drier 400, hard-coating liquid is applied to the convex surface 2 by spin-coating, for example. Then, the convex surface 2 is burnt to form a hard-coating thereon. Similarly, after the concave surface 3 of the plastic lens 1 whose convex surface 2 has been coated with the hard-coating is cleaned and modified by the surface cleaning and modifying apparatus 200, the water cleaning apparatus 300 and the drier 400, hard-coating liquid is applied to the concave surface 3 by spin-coating, for example, and subsequently the concave surface 3 is burnt to form a hard-coating thereon. Thus, the hard-coating is now formed on both sides of the plastic lens 1.

As an alternative method, a hard-coating may be formed simultaneously on both sides of the plastic lens 1 by employing a dipping method in which: after the convex surface 2 of the plastic lens 1 and subsequently the concave surface 3 on the opposite side are cleaned and modified by the surface cleaning and modifying apparatus 200, water cleaning apparatus 300 and the drier 400, hard-coating liquid is applied to the plastic lens 1 by dipping the plastic lens 1 into hard-coating liquid.

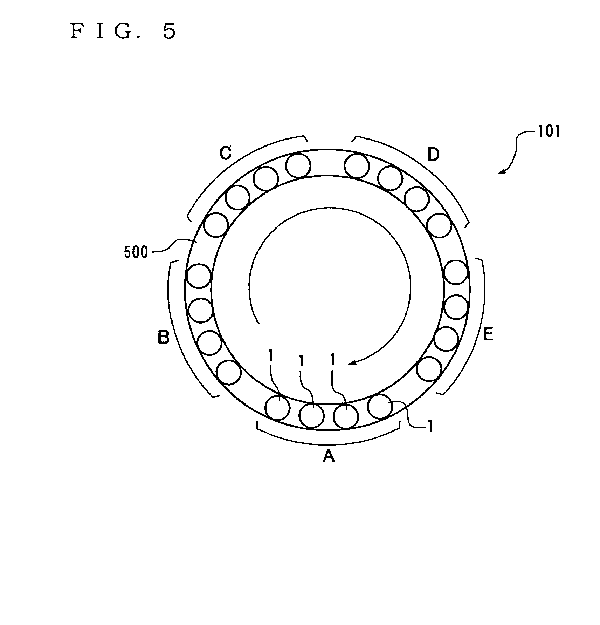

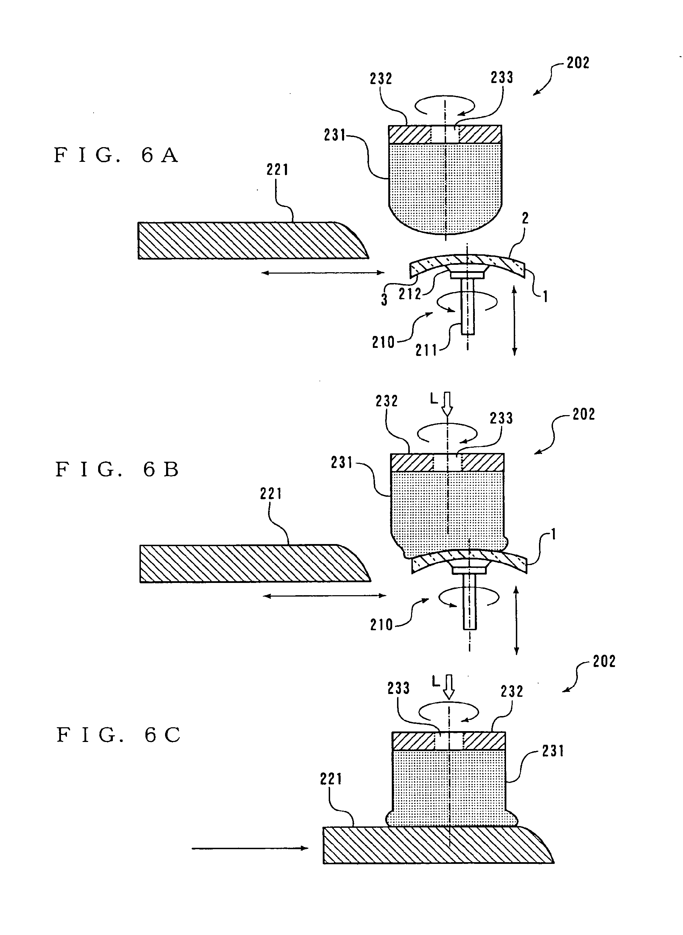

When a hard-coating is simultaneously formed on both sides of the plastic lens 1 by the dipping method, it is possible to successively clean the convex surface 2 and the concave surface 3 by using lens cleaning equipment of a second embodiment illustrated in FIGS. 5 and 6.

Lens cleaning equipment 101 shown in FIG. 5 includes a rotary carrier 500 capable of carrying and processing four plastic lenses 1 simultaneously. The rotary carrier simultaneously carries four plastic lenses 1 which are supplied to A, B, C, D, E and again A in FIG. 5 in this order to process the plastic lenses 1. Four plastic lenses 1 are supplied to a supply and removal section A with the convex surfaces 2 on the upper side. A convex surface cleaning and modifying section B includes four surface cleaning and modifying apparatus so as to simultaneously clean and modify the convex surfaces 2 of the supplied four plastic lenses 1. At a shower-cleaning and turning-over section C, water cleaning is performed by pouring pressurized water onto the convex surfaces 2 of the four plastic lenses 1 from above, and the plastic lenses 1 thus cleaned are turned over to dispose the concave surfaces 3 on the upper side.

A concave surface cleaning and modifying section D includes four surface cleaning and modifying apparatus so as to simultaneously clean and modify the concave surfaces 3 of the four plastic lenses 1 which have been turned over. At a shower cleaning section E, water cleaning is performed by pouring pressurized water onto the concave surfaces 3 of the four plastic lenses 1 from above. After the cleaning and modifying process is completed on both sides of the plastic lenses 1, the four plastic lenses 1 are removed at the supply and removal section A.

A rather facilitated method of shower cleaning is employed for the water cleaning, since a dipping step is practiced as pretreatment for the hard-coating formation after both surfaces are cleaned and modified by the lens cleaning equipment 101. However, water scrub-cleaning using the elastic abrasive body as described above may be carried out instead of shower cleaning.

FIGS. 6(a), 6(b), and 6(c) together schematically illustrate a structure of surface cleaning and modifying apparatus provided at the convex surface cleaning and modifying section B of the lens cleaning equipment 101 in a second embodiment. The surface cleaning and modifying apparatus provided at the concave surface cleaning and modifying section D has the same structure. FIG. 6(a) shows dispositions of respective components in a condition where scrub cleaning and self-cleaning are not performed, FIG. 6(b) shows a condition during scrub cleaning, and FIG. 6(c) shows a condition during self-cleaning.

Surface cleaning and modifying apparatus 202 in this embodiment includes: an elastic abrasive body 231; the optical component holder 210 for holding the lower surface of the plastic lens 1 and rotati ng the plastic lens 1; a pressing member 221; and a not-shown operation section for driving and controlling the optical component holder 210 and the pressing member 221. The elastic abrasive body 231 which is vertically disposed is cylindrical in shape having a dome-shaped lower surface. An upper end surface of the elastic abrasive body 231 is integrally connected with a lower surface of a disc-shaped elastic abrasive body fixing member 232 which is made from a hard material and has approximately the same diameter as that of the elastic abrasive body 231. The elastic abrasive body 231 is supported by a not-shown abrasive body holder in such a manner as to be rotatable around a vertical center axis of the elastic abrasive body 231. A through hole 233 is provided at the center of the elastic abrasive body fixing member 232. The outside diameter of the elastic abrasive body 231 is larger than the radi us of the plastic lens 1, and is rather close to the di ameter of the plastic lens 1.

The elastic abrasive body 231 may be a liquid-permeable abrasive sponge which is made from PVA, urethane, PP or other material. Alternatively, a sponge made from PVA, urethane, PP or other material in which abrasive is dispersed during shaping may be used.

Though not shown, also provided is a liquid supply member for supplying liquid to the through hole 233 positioned at the center of the elastic abrasive body fixing member 232. The liquid supplied to the through hole 233 passes through the elastic abrasive body 231 by its gravity and flows out mainly from its dome-shaped lower surface.

The optical component holder 210 in this embodiment is similar to that in the above-described embodiment, and includes the rotational shaft 211 and the absorption chuck 212 positioned at the upper end of the rotational shaft 211. The rotational shaft 211 is hollow and rotated around a vertically extending axis in a direction opposite to the rotation direction of the elastic abrasive body 231 by a not-shown driving motor. The absorption chuck 212 holds the plastic lens 1 by absorption and communicates with the hollow portion of the rotational shaft 211. The optical component holder 210 is movable upward and downward, and its position is controlled by the operation section. The rotation center of the optical component holder 210 in the vertical direction and the rotation center of the elastic abrasive body 231 in the vertical direction deviate from each other so as to prevent insufficient polishing at the rotation center.

The pressing member 221 in the shape of flat plate is disposed in a horizontal direction. The front end of the pressing member 211 on the elastic abrasive body side is tapered with the upper side in this portion cut off. The pressing member 221 is movable in the horizontal direction, and its position is controlled by the operation section. The pressing member 221 is disposed in such a position as to carry the entire lower surface of the elastic abrasive body 231 when the pressing member 221 is moved to the most advanced position. The upper surface of the pressing member 221 is positioned slightly above the tip of the lower surface of the elastic abrasive body 231. The material of the pressing member 221 is the same as that of the pressing member 220 described above.

A surface cleaning and modifying method using the surface cleaning and modifying apparatus 202 as mentioned is now described. The rotary carrier 500 carries the plastic lens 1 in the surface cleaning and modifying apparatus 202 such that the geometrical center of the plastic lens 1 is aligned with the center of the rotational shaft 211 of the optical component holder 210 and that the concave surface 3 of the plastic lens 1 contacts the absorption chuck 212. A not-shown vacuum piping is connected with the hollow portion of the rotational shaft 211, by which piping the absorption chuck 212 is evacuated after the lower surface of the plastic lens 1 comes into contact with the absorption chuck 212 so that the absorption chuck 212 can hold the concave surface 3 of the plastic lens 1 by absorption.

In the scrub cleaning step, the optical component holder 210 which holds the plastic lens 1 by absorption and rotates the plastic lens 1 at revolution of 50 to 300 rpm, preferably 100 to 200 rpm is raised by the control of the operation section to press the convex surface 2 of the plastic lens 1 against the lower surface of the elastic abrasive body 231 rotating at 50 to 100 rpm as illustrated in FIG. 6(b). The lower surface of the elastic abrasive body 231 contacts at least a region corresponding to the radius of the plastic lens 1. As a result, the entire area of the rotating plastic lens 1 can be polished without shifting the elastic abrasive body 231.

During the scrub cleaning step, slurry containing abrasive as liquid L is supplied to the through hole 233 from a not-shown liquid supply member. The scrub cleaning continues for several seconds to about one minute, generally for about twenty seconds.

By providing the scrub cleaning step in which the plastic lens 1 is rotated and the rotating elastic abrasive body 231 is pressed against the plastic lens 1 while supplying slurry containing abrasive between the elastic abrasive body 231 and the surface of the plastic lens 1 so as to polish the plastic lens 1 with abrasive, dirt or contaminant on the entire convex surface 2 of the plastic lens 1 can be scrubbed off with abrasive and also a non-uniform surface created during shaping or due to degradation after shaping or by other cause can be removed.

Next, in the self-cleaning step, the optical component holder 210 is lowered by the control of the operation section while continuing the rotation of the elastic abrasive body 231 and the supply of the liquid L from the liquid supply member after the scrub cleaning as illustrated in FIG. 6(c). Then, the pressing member 221 is advanced while pressing against the tip of the dome-shaped portion of the elastic abrasive body 231 used for polishing, thereby deforming that portion carried on the pressing member 221. By providing the cleaning step in which the portion of the rotating elastic abrasive body 231 used for polishing is pressed against the pressing member 221 into deformation while supplying the liquid L to the el asti c abrasive body 231 so as to clean the portion of the elastic body 231 used for polishing, contaminant or dirt adhering to the elastic abrasive body 231 can be cleaned off, preventing re-adhesion of the dirt or contaminant to the plastic lens 1 to be cleaned next.

During the self-cleaning step, the scrub-cleaned plastic lens 1 is transferred to the next shower-cleaning and turning-over section C by the rotary carrier 500, and the plastic lens 1 supplied at the supply and removal section A is carried in the convex surface cleaning and modifying section B. After the self-cleaning step, the operation section retreats the pressing member 221 to its original position, and then raises the optical component holder 210 holding the next plastic lens 1 by absorption to perform the scrub cleaning step.

In the above example, slurry which contains abrasive dispersed in liquid such as water is employed as the liquid L. However, water may be used as the liquid L when the elastic abrasive body 231 contains abrasive dispersed therein, in which case the scrub cleaning and the self-cleaning can be performed exactly in the same manner as above.

In the surface cleaning and modifying process where the scrub cleaning step and the self-cleaning step are alternated, since the cleaning is performed with the elastic abrasive body 231 which is always cleaned by the self-cleaning step conducted between the scrub cleaning steps, the plastic lens 1 can be cleaned without leaving dirt or large scratch thereon.

In the above example, the scrub cleaning step and the self-cleaning step are conducted by raising and lowering the optical component holder and shifting the pressing member in the horizontal 1 direction by the control 1 of the operation section. However, these steps can be similarly practiced by shifting the elastic abrasive body with the optical component holder and the pressing member fixed. Additionally, the flat-plate-shaped pressing member is employed herein as an example, but a bar-shaped type which can similarly deform the lower surface of the elastic abrasive body may be used.

In the above example, hard-coating is formed as surface treatment after the surface cleaning and modifying step, but other surface treatment such as formation of a primer layer may be given.

Many further variations to the above-identified embodiments are possible without departing from the scope and spirit of the invention.

## Claims

1. A surface cleaning and modifying method, comprising:
scrub cleaning a plastic optical component, including:
rotating the plastic optical component,
pressing a rotating elastic abrasive body against a surface of said plastic optical component, and
during the pressing, supplying a liquid between the surface of said plastic optical component and said elastic abrasive body, wherein the liquid is a slurry comprising dispersed abrasive; and
self-cleaning said elastic abrasive body, including:
deforming said elastic abrasive body, and
during the deforming, supplying a liquid, to said elastic abrasive body, the liquid being a slurry comprising dispersed abrasive.

2. The surface cleaning and modifying method as set forth in claim 1, wherein said self-cleaning further comprises placing said elastic abrasive body and a pressing member in contact to deform said elastic abrasive body.

3. The surface cleaning and modifying method as set forth in claim 1, further comprising alternately performing said scrub cleaning and said self-cleaning.

4. A surface cleaning and modifying method, comprising:
scrub cleaning a plastic optical component, including:
rotating the plastic optical component,
pressing a rotating elastic abrasive body against a surface of said plastic optical component, the elastic abrasive body comprising dispersed abrasive, and
during the pressing, supplying a liquid comprising water between the surface of said plastic optical component and said elastic abrasive body; and
self-cleaning said elastic abrasive body, including:
deforming said elastic abrasive body, and
during the deforming, supplying a liquid comprising water to said elastic abrasive body.

5. The surface cleaning and modifying method as set forth in claim 4, wherein said self-cleaning further comprises placing said elastic abrasive body and a pressing member in contact to deform said elastic abrasive body.

6. The surface cleaning and modifying method as set forth in claim 4, further comprising alternately performing said scrub cleaning and said self-cleaning.

7. A surface cleaning and modifying apparatus, comprising:
an optical component holder holding and rotating a plastic optical component;
a pressing member separate from said optical component holder;
an abrasive body holder holding and rotating an elastic abrasive body;
an operation section operating one or more of said optical component holder and said abrasive body holder so as to perform operations, including:
a cleaning action of pressing said elastic abrasive body against said plastic optical component, and
a self-cleaning action of placing said elastic abrasive body in contact with said pressing member; and
a liquid supply member for supplying liquid to said elastic abrasive body during said cleaning action and said self-cleaning action.

8. The surface cleaning and modifying apparatus as set forth in claim 7, wherein said operation section alternately conducts said cleaning action and said self-cleaning action.

9. The surface cleaning and modifying apparatus as set forth in claim 7, wherein said liquid is a slurry comprising dispersed abrasive.

10. The surface cleaning and modifying apparatus as set forth in claim 7, wherein said elastic abrasive body comprises dispersed abrasive.

11. The surface cleaning and modifying apparatus as set forth in claim 10, wherein said liquid comprises water.
